# EUROPEAN PATENT APPLICATION

(11) **EP 2 325 785 A1**
(43) Date of publication of application: **25.05.2011**
(21) Application number: 09175267.5
(22) Date of filing: 06.11.2009
(51) Int. Cl.: G06Q 10/00

(54) **Method and system for courier task announcement**

(71) Applicant: Deutsche Post AG, 53113 Bonn (DE)
(72) Inventor: Apthorp, Adrian, RH7 6BH, Lingfield, Surrey (GB)
(74) Representative: Jostarndt, Hans-Dieter

(57) **Abstract**

The present application provides a method and a system adapted for announcement of information for pickup and/or delivery of physical objects by a courier device to the customer device, wherein a courier device sends a first electronic calendar information to the customer device, and wherein the customer device replies an automatically generated reply message with a suggestion to an alternative pickup and/or delivery time through a second electronic calendar information.

## Description

The present invention discloses a method for announcement of information for pickup and/or delivery of physical objects by a courier device to the customer device. Same day courier services deliver in less than 24 hours and are an integral part of any modern economy. Courier services are distinguished from ordinary mail services by features such as speed, security, tracking, conformation of reception with signature, specialisation and individualisation of services, and committed delivery times, which are optional for most everyday mail services. Due to premium service offer, courier services are usually more expensive than usual mail services, and their use is typically restricted to packages where one or more of these features are considered important enough to warrant the cost.

Courier services are specialised in delivering mail pieces of high priority, importance or sensitivity in a local area. Typically courier mail pieces are time and temperature critical goods, such as organs for transplant or key equipment or parts that are necessary for day to day operations. While most companies use courier services certain industries depend on couriers on a daily basis. For example, biomedical laboratories need samples for testing and evaluation, manufacturing industry require parts to keep their plants operating smoothly, financial institutions transfer multiple documents every day between branches and processing centres, law firms must deliver confidential signatured documents on very strict deadlines for court filings and pharmaceutical distributors use couriers to transport medications to hospitals and nursing homes.

Computer systems for organising logistic processes and the exchange of data with major customers are known. The data format of proprietary systems of logistic companies does not allow to use standard devices. In general the customer has to provide hardware, server space at the customer side, also software provided of third parties is available that works across a number of courier companies using their proprietary formats.. Further the logistic system software needs maintenance for regular updates suitably adapted to the server running software of the proprietary system standard of the logistic company. Thus, the customer has to get involved in the process chain of the logistic company. If a major customer uses services of several logistic companies the expenses for above mentioned hardware multiplies with each logistic service, the staff of the customer has to get extra training for application of several mailing tools, which is ineffective and costly. Smaller business clients do normally not have an access to the proprietary systems of a logistic company and thus use services based on the telephone, or need to install a proprietary software to be downloaded on customer's workstation and to be connected to the internet. Also this results in maintenance cost of the workstation and training for the customer's staff. Also for the logistic companies the maintenance of the proprietary system rise high cost and to implement changes in the running system are risky and require high efforts for providing the necessary reliability of the system.

When a customer of a logistic service company offering a courier service wishes to send such courier mail pieces, she/he orders a pickup of the mail object at a distinctive customer pickup and/or delivery location, e.g. an office or a hospital. This is normally made in a telephone call to a booking centre, or via a software module with installed proprietary software of the logistic company or an internet website of the booking centre of the logistic company. For further processing on the proprietary booking system of the logistic company the pickup order is translated into a booking command. The pickup request is registered in the booking system and forwarded via a dispatch system and relayed to a courier. The courier is assigned to the customer's pickup and/or delivery order via a proprietary handheld device or the courier is handed out as printed out paper sheet with the pickup and/or delivery details and routing details.

On the pickup and/or delivery tour the courier normally visits customers at a scheduled time, but due to traffic situation or unavailability of customers, delays in delivery may happen that the time schedule cannot be fulfilled as planned, which causes waiting time for the customers. Due to the predetermined route planning it is merely slightly possible to flexibly react on delay times, therefore redundancy or buffer times have to be scheduled, which is ineffective.

It is the object of the present invention to provide a flexible and efficient time scheduling for pickup and/or delivery of physical objects.

The object is achieved by a method according to claim 1, and a system according to claim 9. Embodiments of the method are given in the dependent claims.

The embodiments of the present invention provide a method and system adapted for announcement of information for pickup and/or delivery of physical objects by a courier device to the customer device, wherein a courier device sends a first electronic calendar information to the customer device, and wherein the customer device replies an automatically generated reply message with a suggestion to an alternative pickup and/or delivery time through a second electronic calendar information.

The idea of the present invention is to provide an effective and flexible method for allowing pickup and/or delivery of physical mail object by using an open communication standard and direct interaction with the customer and the couriers by means of the customer device.

In an advantageous implementation the first electronic calendar information provides a property for characterizing the pickup and/or delivery status for the physical object. The present invention allows the customer to use the iCalendar standard customer device to more accurately determine and select the time slot when the courier is ought to visit the customer for a pickup and/or delivery job, which is appreciated if the customer only has limited time. Advantageously, the time slots may be very short and the appointments can be very precise according to the present invention, because the courier needs less redundancy and buffering in time planning since he knows from the feedback of the customer about the availability of then customer, that the pickup requests on his route planning are most likely to be fulfilled without time waste or that an appointed time slot can be shifted, in case of unplanned incidents without shifting the time schedule for several customers.

In an advantageous implementation the courier device sends a suggestion to one or a plurality of alternative pickup and/or delivery time slots in a first electronic calendar information. The offer of several time slots for a pickup and/or delivery appointment to the customer allows the customer to choose several possibilities according to the customers needs, e.g. a narrower time slot at a reserved time in future might be more suitable to the customer's needs, rather than a relatively broad time slot which is available sooner. This allows a more effective planning for both, the customer as well as a dispatcher or a dispatch logic device in the logistic company managing a group of couriers.

In an advantageous implementation the first electronic calendar information providing properties of the pickup and/or delivery status of a physical object is processed in the customer device.

In an advantageous implementation the courier device additionally to the alternative time slots sends a suggestion for the pickup and/or delivery per a parcel compartment system. In case the customer needs a fixed time slot, depositing the physical object at a local deposition location advantageously allows the customer a collection of the objects at an exactly scheduled time, and allows flexibility to the courier route planning.

In an advantageous implementation the customer device replies a suggestion to an alternative pickup and/or delivery time through a second electronic calendar information.

In an advantageous implementation the customer device replies an automatically generated reply message with a suggestion to an alternative pickup and/or delivery time through a second electronic calendar information. Advantageously, the second electronic calendar information comprises a property providing an automatic status reply, e.g. if the customer is not available or an auto responder generated an automated reply, to announce the postponing of pickup and/or delivery service to the particular customer according to a rule or an order, e.g. delivery at an alternative address, a reservation of a different time slot or pickup and/or delivery at a parcel compartment system.

In an advantageous implementation the pickup time or delivery time suggestion can be delegated from a courier device to another courier device by forwarding of at least one electronic calendar event to another courier device or to the dispatch logic device.

In an advantageous implementation the customer device replies a suggestion to an alternative pickup and/or delivery time through a second electronic calendar information to the dispatch logic device for delegating the reply in a third electronic calendar information to an alternative courier and/or an automated parcel compartment system. A number of couriers might be not actively in duty but might form a reserve for on demand pickup at peak times. According to the present invention, on demand couriers might advantageously be effectively recruited by alarming an alternative reserve courier on a personal mobile communication device, i.e. a mobile phone and by using iCalendar format for interchanging an electronic calendar information with the pickup and/or delivery data.

The aforementioned and other aspects of the invention will also be apparent from and elucidated with reference to the embodiments described hereinafter making reference to the drawings.

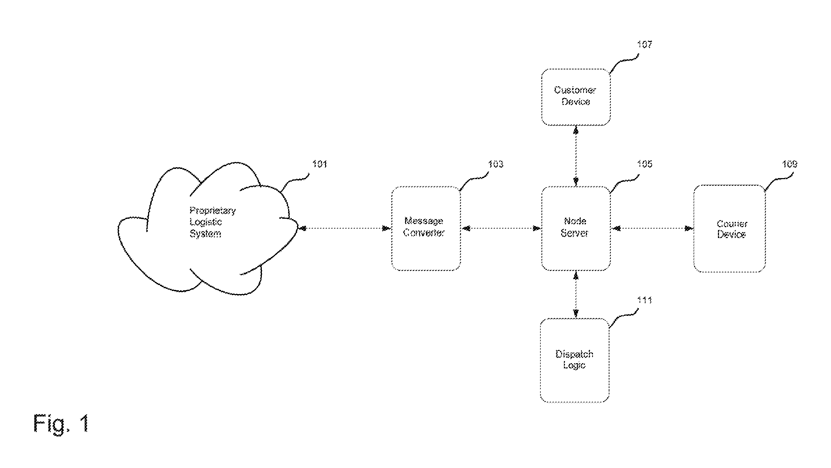

Reference will be made by way of example to the accompanying drawings in which
Fig. 1 shows an illustration of the implementation of the present invention, and

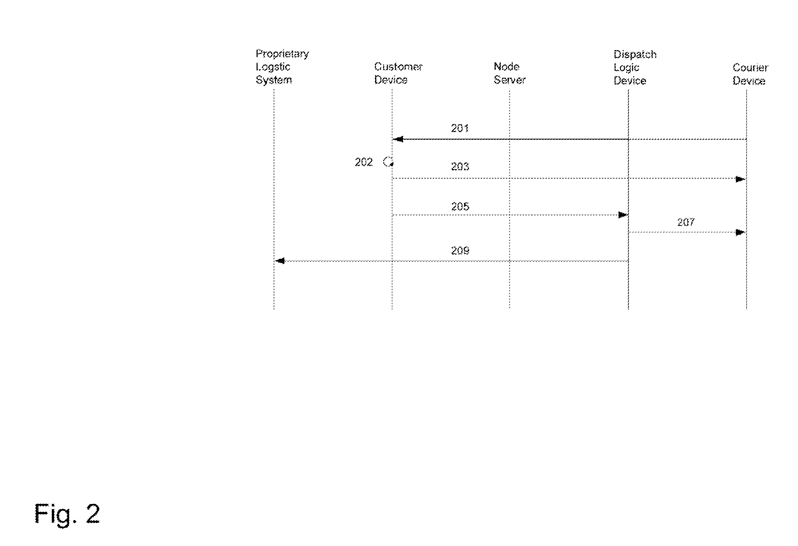

Fig. 2 shows a schematic flow chart of the implementation of the present invention.

The present invention allows to use an open standard for all application of courier service workflow, which allows the customer to use all features and additional features of the logistic service provider on his own hardware and software devices independently of the platform of operation system and allows a high flexibility.

Calendar events can be exchanged over computer networks and the internet for inviting other persons to a meeting, appointment or a telephone call etc. An exchange of a calendar event is normally established by filling out a form in a graphical user interface of a time planner or calendaring tool. When the calendar event has been generated, other persons can be requested to join the event, by exchanging the data in an adapted data format via email with all concerning properties. The person concerned may accept the appointment and confirm or reject the appointment, and sends the changed property data back to the sender. The exchanging of properties in an open standard is known from the iCalendar standard. Also the iCalendar standard may be known, the application of the calendar events for a courier workflow in a standard conform way provides problems.

The iCalendar standard provides the ability to communicate with the customer using the calendar invitations to rearrange a pickup or delivery or physical mail objects in an inventive manner.

The present invention concerns formats for exchanging and storing of calendar events, in particular concerning the following standards of the Internet Engineering Task Force (IETF) in form of Request for Comments (RFC):
- RFC 2445 - Internet Calendaring and Scheduling Core Object Specification (iCalendar)
- RFC 2446 - iCalendar Transport-Independent Interoperability Protocol (iTIP)
- RFC 2247 - Message-Based Interoperability Protocol (iMIP) - e-mail based calendaring
- RFC 4791 - CalDav - http based calendaring
- Internet draft - CaIDAV Scheduling Extensions to WebDAV (CalDav-Sched)

The iCalendar standard regulates the data format for the exchange of meetings times, to-do entries, and other data among compliant applications. iCalendar data is typically exchanged using traditional email programs; some standards e.g. iCalendar and iTIP are designed to be independent of the particular transport protocol.

The iCalendar format is a data format defined by Request for Comments (RFC) 2445 of the Internet Engineering Task Force (IETF). An also known standard, which is compatible to the iCalendar Standard is the vCalendar standard, which is a preceding standard that was promulgated by the Internet Mail Consortium (IMC).

The customer device 107 may either be a software for communication by means of the iCalendar standard or hardware device i.e. a computer or a mobile communication device for example a mobile telephone, a PDA any device that is possibly used for complications especially with a computer network and/or the Internet.

The system according to the present invention comprises a node server 105, and several client devices 103, 107, 109, 111. The node server 105 and client devices 103, 107, 109, 111 interchange data in the iCalendar format. The plurality of client devices comprise particularly at least one customer device 107, a dispatch logic device 111, a courier device 109, and a message converter 103 as an interface to the proprietary logistic system 111. The data format between the message converter 103 and the proprietary logistic system 111 may be different from the iCalendar standard.

Any message interchanged in iCalendar format comprises a plurality of properties in a plurality of data records. It is not necessary to interchange the entire set of properties each time. Most properties are swapped only if changes have been actually made.

A standard message is an iCalendar Event Reply/Request as per RFC 2446. The iCalendar Event Reply/Request comprise standard properties which are interpreted in the client devices in the sense of logistic workflow, e.g. the data property ATTENDEE may comprise information about the receiver address, the ATTACH property may obtain information about physical object type and priority. And it also comprises information which are specially adjusted for logistic purposes, but which are not concerning the customer device 107, e.g. the property X-DHL-COMMENT may concern delivery information at the receivers location.

The dispatch logic device is an appliance that calculates the routing of the couriers transport routes and acts as an autonomous calendar user client interacting with the node server using the standard protocols.

For a pickup and/or delivery service a courier is provided with a scheduled time or time slot, which is delegated by a dispatcher or a dispatch logic device 111 to the courier means of an electronic calendar information to the courier device 109. At the appointed time or at a time within the estimated time slot the courier should contact the customer in person for executing the pickup and/or delivery service. Due to unplanned circumstances, e.g. instable traffic or weather conditions, the courier could be delayed and would not arrive at the appointed time at one of the customers. In a worst case the delay can be protracted as a concatenation of time delays to the customers to be served afterwards which makes the service ineffective and unreliable.

In case that a courier recognises, that he is unable to complete a pickup and/or delivery as agreed, for whatever reason, for example that he is out of time or he cannot reach the customer because the customer is not present, he may use the courier device 109 to send an iCalendar invitation to the customer's device 107 for placing a suggestion for an alternative pickup and/or delivery time appointment.

For making an appointment for a delivery and/or pickup of a physical object, the courier uses a courier device 109 for first query of the availability of the customer. The courier device 109 sends a first information 201 to a previously known address of the customer device 107. In particular the previously known address may be an address which could be obtained from the shipper of the physical object, or a registration of the customer himself/herself. The information might be provided in a notice on the object, or can be coded e.g. in a bar code and/or a Radio Frequency Identification (RFID) tag on the physical object, or might be deposited in a database under a code, which is provided on or with the physical object. The address might be an email address, an address for an instant messaging or a number code or any data provided to send the customer device 107 an iCalendar standard format message.

Also the first information 201 may be issued by the logistics system, in particular in the case, that the shipping service requires that the appointment is agreed with the customer, or the dispatch logic in particular, for example during rescheduling the courier's workload.

The first calendar information 201 sent out by the courier device 109 is an information in iCalendar format in particular the calendar information provides an availability message to the previously provided address of the customer device 107. The incoming first electronic calendar information 201 in form of an invitation to one or a plurality of appointed times or time slots is intercepted by the customer device 107. The customer device 107 displays the information in an calendaring tool or any software that is used to receive and display calendaring events in the first electronic calendar information providing properties of the pickup and/or delivery status of a physical object for the customer to choose the best suitable time slot for pickup and/or delivery or the first electronic calendaring information 201 is directly processed 202 in the customer device 107, e.g. in case of an auto reply message, generated to show that the customer is not available, or any rule that is appropriate to realise an automated processing 202 of incoming electronic calendar information.

The customer then replies by means of the customer device 107 to the courier device 109 in form of a second electronic calendar information 203. Therefore the second electronic calendar information 203 is displayed as one of several appointment time slots with the choice to accept, deny or to postpone the invitation. The calendar events can be displayed in a personal calendar of the customer, so that the customer can adjust the proposed pickup and/or delivery time slot to his/her private or business appointments. The acceptance reply to the invitation changes data properties of the iCalendar format data properties and releases the second electronic calendar information 203 comprising a reply with at least one new appointment time or time slot to be provided to the courier device 109. The courier now can accept the invitation with the new time slot or time appointment, and hence prepare pickup and/or delivery of the physical object to the newly appointed time. Alternatively the courier may delegate the second electronic calendar information 203 to another courier device 109 or to a dispatcher logic device 111 to allow a further route planning or involving further resources or other couriers or the proprietary booking system of the logistic company.

In another embodiment the customer sends the second electronic calendar information 203 to the dispatcher logic device 111, e.g. if the reply address in the data structure provides the dispatch logic device 111 as reply contact, in order to allow different strategies of route planning e.g. to use different route planning algorithms to be contemplated in reference to the timing advance of the time slot, and the time slot length, priority of pickup and/or delivery or other criteria.

In another embodiment the dispatch logic device 111 implements a resource allocation algorithm to be contemplated, e.g. if a customer requires an out of hours collection couriers reserved for special purposes could perform the service, or e.g. to forward the request to multiple couriers and the first one to accept gets the job. Both strategies are used alternatively or in parallel.

The transfer of several time slots allows the customer to choose a narrower time slot at a reserved time in future, rather than a relatively broad time slot which is available sooner. This allows a more effective planning for both, the customer as well as the dispatcher or a dispatch logic device 111. Or in case that the customer did not provide a new appointment to the courier, originally sending the first electronic calendar information 201 to the customer but to another courier in charge, or that the customer is not available and the pickup and/or delivery is delegated to a parcel compartment system. The dispatch logic device 111 then delegates the pickup and/or delivery job as a third electronic calendar information 207 to a courier device 109. Alternatively, the dispatch logic device 111 could address a courier to pickup and/or of deliver of a physical object to a parcel compartment system, or a manned counter or any other appliance for delivery or supply of physical mail objects, and send the courier a third electronic calendar information 207 to the courier device 109 and at the same time a reservation of capacities in form of a fourth electronic calendar information 209 in a parcel compartment system is made via a message converter 103 to the proprietary booking system 101 comprising the parcel compartment system.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfil the functions of several items recited in the claims.

### List of reference numerals:

- 101: Proprietary Logistic System
- 103: Message Converter
- 105: Node Server
- 107: Customer Device
- 109: Courier Device
- 111: Dispatch Logic Device
- 201: First electronic calendar information
- 202: Processing calendar information
- 203: Second electronic calendar information
- 205: Second electronic calendar information
- 207: Third electronic calendar information
- 209: Fourth electronic calendar information

## Claims

1. Method for announcement of information for pickup and/or delivery of physical objects by a courier device (109) to the customer device (107), **characterised in that** a courier device (109) sends a first electronic calendar information (201) to the customer device (107), and that the customer device (107) replies an automatically generated reply message with a suggestion to an alternative pickup and/or delivery time through a second electronic calendar information (203).

2. Method according to claim 1, wherein the first electronic calendar information (201) provides a property for characterizing the pickup and/or delivery status for the physical object.

3. Method according to any of the preceding claims, wherein the courier device (109) sends a suggestion to one or a plurality of alternative pickup and/or delivery time slots in a first electronic calendar information (203).

4. Method according to any of the preceding claims, wherein the first electronic calendar information (201) providing properties of the pickup and/or delivery status of a physical object is processed (202) in the customer device (107).

5. Method according to any of the preceding claims, wherein the courier device (109) additionally to the alternative time slots sends a suggestion for the pickup and/or delivery per a parcel compartment system.

6. Method according to any of the preceding claims, wherein the customer device (107) replies a suggestion to an alternative pickup and/or delivery time through a second electronic calendar information (203).

7. Method according to any of the preceding claims, wherein pickup time or delivery time suggestion can be delegated from a courier device (111) to another courier device (109) by forwarding of at least one electronic calendar event to another courier device (109) or to the dispatch logic device (111).

8. Method according to any of the preceding claims, wherein the customer device (107) replies a suggestion to an alternative pickup and/or delivery time through a second electronic calendar information (203) information to the dispatch logic device (111) for delegating the reply in a third electronic calendar information (207) to an alternative courier and/or an automated parcel compartment system.

9. System adapted for announcement of information for pickup and/or delivery of physical objects by a courier device (109) to the customer device (107), **characterised in that** a courier device (109) sends a first electronic calendar information (201) to the customer device (107), and that the customer device (107) replies an automatically generated reply message with a suggestion to an alternative pickup and/or delivery time through a second electronic calendar information (203).
